# EUROPÄISCHE PATENTSCHRIFT

(11) **EP 1 315 925 B1**
(45) Veröffentlichungstag und Bekanntmachung des Hinweises auf die Patenterteilung: **07.09.2005**
(21) Anmeldenummer: 01954008.7
(22) Anmeldetag: 05.07.2001
(51) Int. Cl.: F16J 15/02, F21V 31/00

(54) **DICHTUNGSPROFIL FÜR EINE LEUCHTE**
SEALING SECTION FOR A LAMP
PROFILE D'ETANCHEITE POUR UNE LAMPE

(30) Priorität: 06.09.2000 DE 20015359 U
(43) Veröffentlichungstag der Anmeldung: 04.06.2003
(73) Patentinhaber: Meteor Gummiwerke K.H. Bädje GmbH & Co. KG., 31167 Bockenem (DE)
(72) Erfinder: RANZAU, Heiko, 31167 Bockenem (DE)
(74) Vertreter: Sobisch, Peter
(86) Internationale Anmeldenummer: PCT/EP2001/007665
(87) Internationale Veröffentlichungsnummer: WO 2002/021026

(56) Entgegenhaltungen:
- EP-A- 0 093 889
- DE-U- 20 006 571
- DE-U- 20 015 359
- DE-U- 29 810 708
- FR-A- 2 231 531
- FR-A- 2 431 644

## Beschreibung

Die Erfindung betrifft ein Dichtungsprofil nach dem Oberbegriff des Anspruchs 1.

Bei einem bekannten Dichtungsprofil dieser Art (DE 298 10 708 U1, Fig. 2) wird schon durch eine Dichtrippe am Fußabschnitt eine erhöhte Sicherheit gegen Feuchtigkeitsunterwanderung am Nutgrund erzielt.

Aus der DE 42 05 442 A1 ist es an sich bekannt, eine ebene Basisfläche eines Dichtungsprofils ganzflächig an eine komplementär ebene Grundfläche im Grund einer Aufnahmenut anzulegen. Auch durch diese Anordnung ist Feuchtigkeitsunterwanderung nicht ausgeschlossen.

Aus der FR 2.231.531 ist ein zur Abdichtung eines Gehäuses gegenüber einer Scheibe bestimmtes, aus Kautschuk bestehendes Dichtungsprofil bekannt, welches eine seitliche Nut aufweist, über welche es auf die Berandung einer Fahrzeugstruktur aufsteckbar ist, wobei sich seitlich neben dieser Nut eine zur Aufnahme eines Klebstoffstrangs bestimmte Nut befindet und wobei seitlich neben letztgenannter Aufnahmenut eine zur Anlage an einer Fahrzeugkarosserie bestimmte Dichtungslippe angeformt ist. Der Aufnahmenut gegenüberliegend ist eine zur Aufnahme einer Scheibe bestimmte, mit seitlichen Anlageflächen versehene Nut vorgesehen. Dieses bekannte, mit einer U-förmigen Armierung versehene Dichtungsprofil ist formschlüssig über die Berandung an der Fahrzeugkarosserie gehalten und steht mit dieser ferner über eine Klebung in Verbindung. Es weise jedoch eine vergleichsweise komplizierte Struktur auf.

Der Erfindung liegt die Aufgabe zugrunde, ein Dichtungsprofil der eingangs bezeichneten Art dahingehend auszugestalten, dass bei einer einfachen Struktur eine Feuchtigkeitsunterwanderung am Nutgrund zuverlässig ausgeschlossen werden kann. Diese Aufgabe ist durch die Merkmale des Anspruchs 1 gelöst.

Der Strang verhindert jeden Durchtritt von Feuchtigkeit zwischen dem Dichtungsprofil und dem Nutgrund. Bevorzugter Einsatzbereich ist die Abdichtung von Kraftfahrzeugscheinwerfern, wobei die Abschlussscheibe aus Kunststoff oder Glas bestehen kann. Dort ist es unerlässlich, dass die Dichtwirkung auch bei einem Temperaturwechsel und bei Erschütterungen stets gewährleistet ist. Der Strang wird auch bei entspanntem Dichtungsprofil sicher in der Haltenut gehalten.

Die Merkmale des Anspruchs 2 dienen dazu, die Hafteigenschaften des Stranges auch in der Zeit bis zum Einsetzen des Dichtungsprofils in die Nut zu gewährleisten.

Gemäß Anspruch 3 ist ein solcher Schutz des Stranges bis zum Einsetzen in die Nut auch ohne Abdeckfolie zu erreichen.

Durch die Merkmale des Anspruchs 4 wird dieser Schutzeffekt noch verstärkt.

Gemäß Anspruch 5 kann die Querschnittsform der Haltenut während des Einsetzens des Dichtungsprofils in die Nut auf einfache Weise in der gewünschten Weise verändert werden.

Die Merkmale des Anspruchs 6 erleichtem das Auspressen des Stranges aus der Haltenut.

Gemäß Anspruch 7 kann das Auspressen des Stranges sehr genau gesteuert und beeinflusst werden.

Die Merkmale des Anspruchs 8 steigern die Auspresswirkung, wobei sich Masse des Stranges in gewünschter Weise und in gewünschtem Umfang zwischen dem Nutgrund und dem eingesetzten Dichtungsprofil ausbreiten und für eine ausgezeichnete dauerhafte Abdichtung sorgen kann.

Gemäß Anspruch 9 wird der Strang besonders sicher an Ort und Stelle in dem Fußabschnitt gehalten.

Die Merkmale jedes der Ansprüche 10 bis 12 gewährleisten eine dauerhafte, vollständige Feuchtigkeitsabdichtung am Nutgrund.

Mit den Merkmalen des Anspruchs 13 erhält man eine besonders günstige Dichtwirkung einerseits innerhalb der Nut und andererseits zwischen dem Dichtabschnitt und der Abschlussscheibe.

Weitere Merkmale und Vorteile der Erfindung ergeben sich aus der nachfolgenden Beschreibung der in den Zeichnungen dargestellten Ausführungsbeispiele. Es zeigt
Fig. 1 einen Querschnitt durch ein in eine Nut eines Gehäuses eingesetztes Dichtungsprofil, wobei das Dichtungsprofil allerdings in entspannter Ausgangslage gezeichnet ist, und
Fig. 2 einen der Fig. 1 entsprechenden Querschnitt durch eine andere Ausführungsform des Dichtungsprofils.

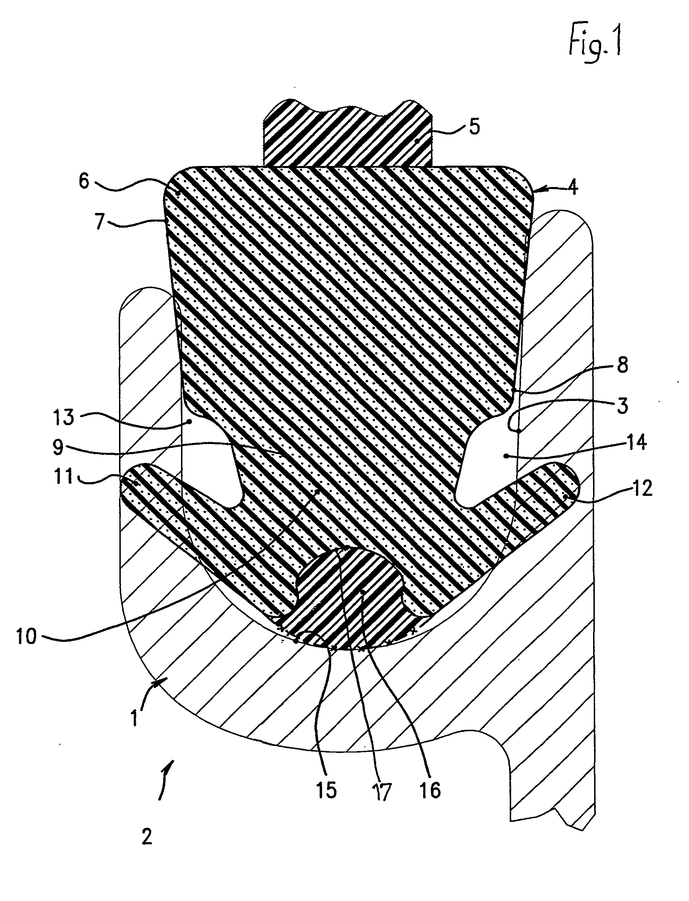

Fig. 1 zeigt einen Teil eines Gehäuses 1 einer Leuchte 2 eines Kraftfahrzeugs. In eine Nut 3 des Gehäuses 1 ist ein Dichtungsprofil 4 eingesetzt. Das Dichtungsprofil 4 weist einen mit einer Abschlussscheibe 5 der Leuchte 2 zusammenwirkenden Dichtabschnitt 6 mit seitlichen Anlageflächen 7 und 8 auf, die sich bei in die Nut 3 eingesetztem Dichtungsprofil 4 unter Quervorspannung an in Fig. 1 obere Seitenflächen der Nut 3 anlegen. Der Dichtabschnitt 6 geht in Fig. 1 nach unten hin in einen Verbindungsabschnitt 9 von reduzierter Querschnittsfläche über. Der Verbindungsabschnitt 9 schafft eine elastische Verbindung zu einem Fußabschnitt 10, der mit gegenüberliegenden seitlichen Haltelippen 11 und 12 versehen ist. Bei in die Nut 3 eingedrücktem Dichtungsprofil 4 schwenken die Haltelippen 11, 12 nach innen in Kanäle 13 und 14 zwischen der Nut 3 und dem Verbindungsabschnitt 9. Dadurch ergibt sich einerseits eine gute seitliche Dichtwirkung des Dichtungsprofils 4 gegenüber den Seitenwänden der Nut 3 und zum anderen ein erhebliche Haftreibung, die ein unbeabsichtigtes Herausfallen des Dichtungsprofils 4 aus der Nut 3 verhindert, solange die Abschlussscheibe 5 nicht montiert ist.

Der Fußabschnitt 10 weist gegenüber einem Nutgrund 15 der Nut 3 einen mit dem Nutgrund 15 abdichtend zusammenwirkenden Strang 16 auf. Der Strang 16 ist mit einem Teil seiner Querschnittsfläche in einer Haltenut 17 des Fußabschnitts 10 angeordnet. Vorzugsweise besteht der Strang aus einer dauerhaft klebenden Dichtmasse auf Butylbasis. Bis zum Einsetzen des Dichtungsprofils 4 in die Nut 3 kann der aus der Haltenut 17 herausragende Oberflächenteil des Stranges 16 mit einer nicht gezeichneten Abdeckfolie abgedeckt sein.

Beim Eindrücken des Dichtungsprofils 4 in die Nut 3 tritt der Strang 16 in Berührung mit dem Nutgrund 15 und verbindet sich dauerhaft klebend und elastisch mit dem Nutgrund 15. Auf diese Weise ist es ausgeschlossen, dass Feuchtigkeit, die noch zwischen dem Dichtabschnitt 6 und einer Seitenwand der Nut 3 hindurchgetreten ist, zwischen dem Nutgrund 15 und dem Strang 16 hindurchtreten kann.

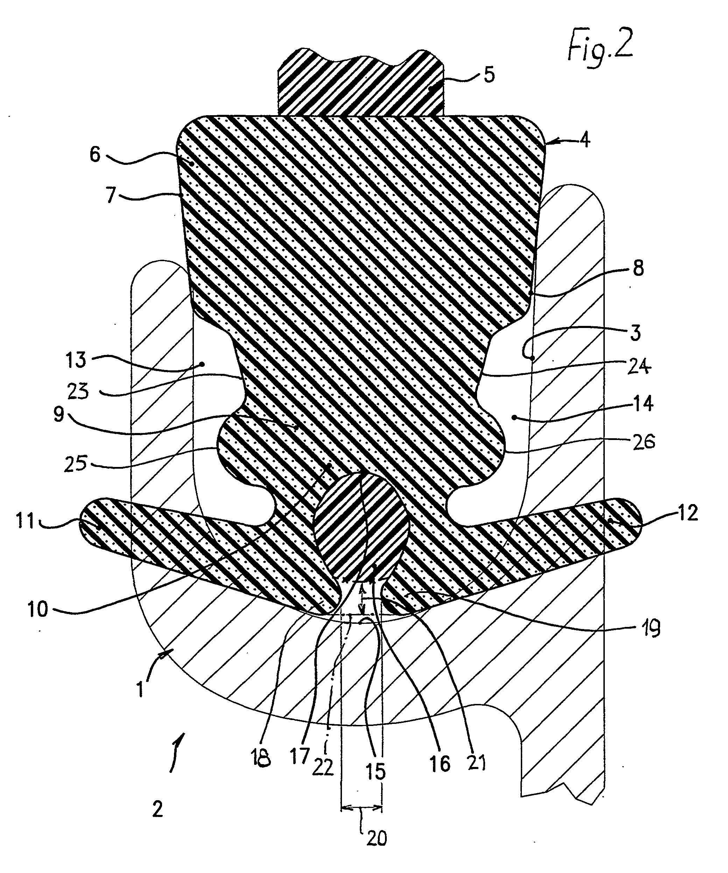

In Fig. 2 sind gleiche Teile wie in Fig. 1 mit gleichen Bezugszahlen versehen.

Das Ausführungsbeispiel nach Fig. 2 ähnelt dem gemäß Fig. 1. Allerdings sind in Fig. 2 in der gezeichneten entspannten Lage des Dichtungsprofils 4 die Haltelippen 11, 12 etwas länger und flacher angestellt als in Fig. 1. Die Haltenut 17 ist in Fig. 2 teilweise durch innere Enden 18 und 19 der Haltelippen 11, 12 definiert. Bei entspanntem Dichtungsprofil, wie in Fig. 2 gezeichnet, bilden die inneren Enden 18, 19 einen Spalt 20 zwischen sich.

Bei entspanntem Dichtungsprofil 4 ist der Strang 16 vollständig innerhalb der Haltenut 17 und sogar in einem Abstand 21 von einer Außenkontur 22 des Fußabschnitts 10 angeordnet. So liegt also eine in Fig. 2 untere freie Oberfläche des Strangs 16 geschützt innerhalb der Haltenut 17. Dadurch ist es nicht erforderlich, diese freie Oberfläche bis zum Einsetzen des Dichtungsprofils 4 in die Nut 3 mit einer Abdeckfolie abzudecken.

Beim Einsetzen des Dichtungsprofils 4 in die Nut 3 werden die Haltelippen 11, 12 hochgeschwenkt, in die Kanäle 13, 14 bewegt und an Seitenflächen 23 und 24 des Verbindungsabschnitts 9 angepresst. Dadurch wird einerseits der Spalt 20 vergrößert und andererseits der Strang 16 mit einem Teil seiner Querschnittsfläche aus der Haltenut 17 in Dichtberührung mit dem Nutgrund 15 ausgepresst.

Zur Förderung dieser Auspresswirkung kann jede Seitenfläche 23, 24 mit einer nach außen zu der zugehörigen Haltelippe 11, 12 hin vorspringenden Rippe 25 und 26 versehen sein. Diese Rippen 25, 26 sind vorzugsweise im Bereich des in Fig. 2 oberen Endes der Haltenut 17 angeordnet, so dass die Auspresswirkung, ausgehend von diesem oberen Ende der Haltenut 17, zu deren unterem Ende hin fortschreitet.

## Patentansprüche

1. Dichtungsprofil (4) zur Abdichtung eines Gehäuses (1) gegenüber einer Abschlussscheibe (5) einer Leuchte (2),
wobei das Dichtungsprofil (4) aus wenigstens einem Elastomer extrudierbar und zum Zusammenwirken mit einer, einen Nutgrund (15) aufweisenden Nut (3) des Gehäuses (1) geeignet ist und einen Dichtabschnitt (6) mit seitlichen Anlageflächen (7,8), einen Verbindungsabschnitt (9) von reduzierter Querschnittsfläche und einen mit seitlichen Haltelippen (11,12) versehenen Fußabschnitt (10) aufweist und wobei der Dichtabschnitt (6) zum Zusammenwirken mit der Abschlussscheibe (5) der Leuchte (2) geeignet ist,
**dadurch gekennzeichnet, dass** der Fußabschnitt (10) einen zum abdichtenden Zusammenwirken mit dem Nutgrund (15) der Nut (3) geeigneten Strang (16) aufweist,
dass der Strang (16) mit einem Teil seiner Querschnittsfläche in einer Haltenut (17) des Fußabschnitts (10) angeordnet ist, wenn das Dichtungsprofil (4) entspannt und noch nicht in die Nut (3) eingesetzt ist,
und dass der Querschnitt des Dichtungsprofils (4) in Bezug auf die Symmetrieachse der Haltenut (17) symmetrisch ist.

2. Dichtungsprofil nach Anspruch 1,
**dadurch gekennzeichnet, dass** der Strang (16) bis zu seinem Einsetzen in die Nut (3) entlang einem aus der Nut (3) herausragenden Oberflächenbereich durch eine Abdeckfolie abgedeckt ist.

3. Dichtungsprofil nach Anspruch 1,
**dadurch gekennzeichnet, dass** der Strang (16) vollständig innerhalb einer Haltenut (17) des Fußabschnitts (10) angeordnet ist, wenn das Dichtungsprofil (4) entspannt und noch nicht in die Nut (3) eingesetzt ist.

4. Dichtungsprofil nach Anspruch 3,
**dadurch gekennzeichnet, dass** der Strang (16) in einem Abstand (21) von einer Außenkontur (22) des entspannten Fußabschnitts (10) angeordnet ist.

5. Dichtungsprofil nach einem der Ansprüche 1 bis 4,
**dadurch gekennzeichnet, dass** die Haltenut (17) teilweise durch innere Enden (18,19) der Haltelippen (11,12) definiert ist.

6. Dichtungsprofil nach Anspruch 5,
**dadurch gekennzeichnet, dass** bei entspanntem Dichtungsprofil (4) die inneren Enden (18,19) zwischen sich einen Spalt (20) bilden.

7. Dichtungsprofil nach Anspruch 6,
**dadurch gekennzeichnet, dass** beim Einsetzen des Dichtungsprofils (4) in die Nut (3) die Haltelippen (11,12) an Seitenflächen (23,24) des Verbindungsabschnitts (9) schwenkbar und pressbar sind,
und dass **dadurch** einerseits der Spalt (20) vergrößerbar und andererseits der Strang (16) mit einem Teil seiner Querschnittsfläche aus der Haltenut (17) in Berührung mit dem Nutgrund (15) auspressbar ist.

8. Dichtungsprofil nach Anspruch 7,
**dadurch gekennzeichnet, dass** zur Förderung der Auspresswirkung jede Seitenfläche (23,24) mit einer nach außen zu der zugehörigen Haltelippe (11,12) hin vorspringenden Rippe (25,26) versehen ist.

9. Dichtungsprofil nach einem der Ansprüche 1 bis 8,
**dadurch gekennzeichnet, dass** der Strang (16) mit einem Teil seiner Querschnittsfläche in einer Haltenut (17) des Fußabschnitts (10) angeordnet ist, wenn das Dichtungsprofil (4) in die Nut (3) eingesetzt ist.

10. Dichtungsprofil nach einem der Ansprüche 1 bis 9,
**dadurch gekennzeichnet, dass** der Strang (16) aus einer dauerelastischen Dichtmasse besteht.

11. Dichtungsprofil nach einem der Ansprüche 1 bis 10,
**dadurch gekennzeichnet, dass** der Strang (16) aus einer dauerhaft klebenden Dichtmasse besteht.

12. Dichtungsprofil nach einem der Ansprüche 1 bis 11,
**dadurch gekennzeichnet, dass** der Strang (16) aus einer Dichtmasse auf Butylbasis besteht.

13. Dichtungsprofil nach einem der Ansprüche 1 bis 12,
**dadurch gekennzeichnet, dass** das Dichtungsprofil (4) aus EPDM-Moosgummi einer Härte von 15 bis 25 Shore A besteht.

## Claims

1. Sealing profile (4) for sealing a casing (1) with respect to a cover disc (5) of a lamp (2),
wherein the sealing profile (4) can be extruded from at least one elastomer and can interact with a groove (3), comprising a groove base (15), in the casing (1) and has a seal section (6) with lateral contact surfaces (7, 8), a connection section (9) which has a reduced cross-section and a foot section (10) which is provided with lateral retaining lips (11, 12), and wherein the seal section (6) can interact with the cover disc (5) of the lamp (2),
**characterised in that** the foot section (10) has a strip (16) suitable for sealed interaction with the groove base (15) of the groove (3),
that the strip (16) is disposed with a portion of its cross-sectional surface in a retaining groove (17) in the foot section (10) when the sealing profile (4) is in the relaxed state and not yet inserted into the groove (3),
and that the cross-section of the sealing profile (4) is symmetrical with respect to the axis of symmetry of the retaining groove (17).

2. Sealing profile as claimed in claim 1,
**characterised in that** until the strip (16) is inserted into the groove (3) the strip is covered by a cover sheet along a surface region protruding out of the groove (3).

3. Sealing profile as claimed in claim 1,
**characterised in that** the strip (16) is disposed entirely within a retaining groove (17) in the foot section (10) when the sealing profile (4) is in the relaxed state and not yet inserted into the groove (3).

4. Sealing profile as claimed in claim 3,
**characterised in that** the strip (16) is disposed at a spaced disposition (21) from the outer contour (22) of the relaxed foot section (10).

5. Sealing profile as claimed in any one of claims 1 to 4,
**characterised in that** the retaining groove (17) is partially defined by inner ends (18, 19) of the retaining lips (11, 12).

6. Sealing profile as claimed in claim 5,
**characterised in that** when the sealing profile (4) is in the relaxed state the inner ends (18, 19) form a gap (20) between themselves.

7. Sealing profile as claimed in claim 6,
**characterised in that** when inserting the sealing profile (4) into the groove (3) the retaining lips (11, 12) can be pivoted towards and pressed against the lateral surfaces (23, 24) of the connection section (9),
and that as a consequence on the one hand the gap (20) can be enlarged and on the other hand the strip (16) can be pressed out of the retaining groove (17) with a portion of its cross-sectional surface into contact with the groove base (15).

8. Sealing profile as claimed in claim 7,
**characterised in that** in order to promote the pressing-out effect each lateral surface (23, 24) is provided with a rib (25, 26) which protrudes outwards towards the associated retaining lip (11, 12).

9. Sealing profile as claimed in any one of claims 1 to 8,
**characterised in that** the strip (16) is disposed with a portion of its cross-sectional surface in a retaining groove (17) in the foot section (10) when the sealing profile (4) is inserted into the groove (3).

10. Sealing profile as claimed in any one of claims 1 to 9,
**characterised in that** the strip (16) consists of a permanently elastic sealing mass.

11. Sealing profile as claimed in any one of claims 1 to 10,
**characterised in that** the strip (16) consists of a permanently adhering sealing mass.

12. Sealing profile as claimed in any one of claims 1 to 11,
**characterised in that** the strip (16) consists of a butyl-based sealing mass.

13. Sealing profile as claimed in any one of claims 1 to 12,
**characterised in that** the sealing profile (4) consists of EPDM cellular rubber having a Shore A hardness of 15 to 25.

## Revendications

1. Profilé d'étanchéité (4) pour l'étanchéification d'un boîtier (1) par rapport à une vitre de fermeture (5) d'un projecteur (2),
le profilé d'étanchéité (4) pouvant être extrudé à partir d'au moins un élastomère et étant approprié pour coopérer avec une gorge (3) du boîtier (1) qui présente un fond (15), et présentant un segment d'étanchéité (6) qui possède des surfaces d'appui latérales (7, 8), un segment de liaison (9) ayant une surface de section réduite et un segment de pied (10) muni de lèvres de retenue latérales (11, 12), le segment d'étanchéité (6) étant approprié pour coopérer avec la vitre de fermeture (5) du projecteur (2),
**caractérisé en ce que** le segment de pied (10) présente un cordon (16) approprié pour coopérer avec le fond (15) de la gorge (3) à fin d'étanchéification,
**en ce que** le cordon (16) est disposé de façon qu'une partie de sa surface de section soit placée dans une gorge de retenue (17) du segment de pied (10) lorsque le profilé d'étanchéité (4) est détendu et n'est pas encore emboîté dans la gorge (3)
et **en ce que** la section du profilé d'étanchéité (4) est symétrique par rapport à l'axe de symétrie de la gorge de retenue (17).

2. Profilé d'étanchéité selon la revendication 1,
**caractérisé en ce que**, jusqu'au moment d'être emboîté dans la gorge (3), le cordon (16) est recouvert d'un film de protection le long d'une région de surface qui fait saillie hors de la gorge (3).

3. Profilé d'étanchéité selon la revendication 1,
**caractérisé en ce que** le cordon (16) est disposé entièrement à l'intérieur d'une gorge de retenue (17) du segment de pied (10) lorsque le profilé d'étanchéité (4) est détendu et n'est pas encore emboîté dans la gorge (3).

4. Profilé d'étanchéité selon la revendication 3,
**caractérisé en ce que** le cordon (16) est disposé à une distance (21) d'un contour extérieur (22) du segment de pied (10) à l'état détendu.

5. Profilé d'étanchéité selon une des revendications 1 à 4,
**caractérisé en ce que** la gorge de retenue (17) est partiellement définie par des extrémités intérieures (18, 19) des lèvres de retenue (11, 12).

6. Profilé d'étanchéité selon la revendication 5,
**caractérisé en ce que**, lorsque le profilé d'étanchéité (4) est détendu, les extrémités intérieures (18, 19) forment entre elles une fente (20).

7. Profilé d'étanchéité selon la revendication 6,
**caractérisé en ce que**, lors de l'emboîtement du profilé d'étanchéité (4) dans la gorge (3), les lèvres de retenue (11, 12) peuvent s'incliner et être pressées contre les surfaces latérales (23, 24) du segment de liaison (9),
et **en ce que**, sous cet effet, d'une part, la fente (20) peut s'agrandir et, d'autre part, le cordon (16) peut être expulsé hors de la gorge de retenue (17) et mis en contact avec le fond de gorge (15), par une partie de sa surface de section.

8. Profilé d'étanchéité selon la revendication 7,
**caractérisé en ce que**, pour assister l'effet d'expulsion, chaque surface latérale (23, 24) est munie d'une nervure (25, 26) en saillie vers l'extérieur, en direction de la lèvre de retenue (11, 12).

9. Profilé d'étanchéité selon une des revendications 1 à 8,
**caractérisé en ce qu'**un partie de la surface de section du cordon (16) est logée dans une gorge de retenue (17) du segment de pied (10) lorsque le profilé d'étanchéité (4) est emboîté dans la gorge (3).

10. Profilé d'étanchéité selon une des revendications 1 à 9,
**caractérisé en ce que** le cordon (16) est fait d'une masse d'étanchéité durablement élastique.

11. Profilé d'étanchéité selon une des revendications 1 à 10,
**caractérisé en ce que** le cordon (16) est fait d'une masse d'étanchéité durablement adhésive.

12. Profilé d'étanchéité selon une des revendications 1 à 11,
**caractérisé en ce que** le cordon (16) est composé d'une masse d'étanchéité à base de butyle.

13. Profilé d'étanchéité selon une des revendications 1 à 12,
**caractérisé en ce que** le profilé d'étanchéité (4) est composé d'une mousse de caoutchouc EPDM d'une dureté de 15 à 25 Shore A.
